Europäisches Patentamt

(19) European Patent Office

Office européen des brevets

(11) Publication number: **0 126 063**
**B1**

## (12) EUROPEAN PATENT SPECIFICATION

(45) Date of publication of patent specification: **18.05.88**

(51) Int. Cl.⁴: **C 04 B 35/58**

(21) Application number: **82903510.4**

(22) Date of filing: **30.09.82**

(86) International application number:
**PCT/US82/01372**

(87) International publication number:
**WO 84/01371 12.04.84 Gazette 84/10**

(54) **PROCESS FOR PRODUCING CUTTING TOOLS FROM Si3N4-SILICON NITRIDE BY CHEMICAL BONDING OR BY HOT-PRESSING.**

| | |
|---|---|
| (43) Date of publication of application:<br>**28.11.84 Bulletin 84/48** | (73) Proprietor: **Ford Motor Company**<br>**The American Road**<br>**Dearborn, MI 48121 (US)**<br>(84) **BE NL SE** |
| (45) Publication of the grant of the patent:<br>**18.05.88 Bulletin 88/20** | (73) Proprietor: **FORD MOTOR COMPANY LIMITED**<br>**Eagle Way**<br>**Brentwood Essex CM13 3BW (GB)** |
| (84) Designated Contracting States:<br>**BE DE FR GB NL SE** | (84) **GB** |
| (56) References cited:<br>**WO-A-80/00080**<br>**WO-A-82/04245**<br>**GB-A-1 340 696**<br>**GB-A-1 393 579**<br>**GB-A-2 045 807**<br>**GB-A-2 063 302**<br>**US-A-3 206 318**<br>**US-A-3 455 682**<br>**US-A-3 991 166**<br>**US-A-4 119 690**<br>**US-A-4 122 140**<br>**US-A-4 143 107**<br>**US-A-4 147 759**<br>**US-A-4 172 108**<br>**US-A-4 256 688**<br>**US-A-4 264 550**<br>**US-A-4 285 895**<br>**US-A-4 314 961** | (73) Proprietor: **FORD-WERKE**<br>**AKTIENGESELLSCHAFT**<br>**Ottoplatz 2 Postfach 21 03 69**<br>**D-5000 Köln 21 (DE)**<br>(84) **DE**<br><br>(73) Proprietor: **FORD FRANCE SOCIETE ANONYME**<br>**344 Avenue Napoléon Bonaparte B.P. 307**<br>**F-92506 Rueil Malmaison Cedex (FR)**<br>(84) **FR**<br><br>(72) Inventor: **EZIS, Andre**<br>**23235 West River Road**<br>**Grosse Ile, MI 48138 (US)**<br>Inventor: **BECKWITH, Elaine, C.**<br>**13716 Hamilton**<br>**Riverview, MI 48192 (US)**<br><br>(74) Representative: **Messulam, Alec Moses et al**<br>**A. Messulam & Co. 24 Broadway**<br>**Leigh on Sea Essex SS9 1BN (GB)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 126 063 B1

## Description

The invention relates to a method of making a reaction bonded/hot pressed silicon nitride comprising object.

$Si_3N_4$ has been known as a ceramic since 1857, but its structure was not determined with some degree of certainty until the 1950's. Useful objects have been fabricated from this ceramic by essentially two methods or arts; (1) hot pressing $Si_3N_4$ powder mixed with pressing aids, or (2) reaction bonding silicon powder mixed with a catalyst by heating in nitrogen. The two modes were combined in U.S. patent 3,839,540, permitting pressing aids to be added to silicon prior to reaction bonding heating, thus eliminating the need for a catalyst and producing a much more dimensionally accurate product.

In the hot pressing art, pressing aid additives were deemed necessary because pure $Si_3N_4$ is almost unsinterable, even under pressure. Typically, such aids have included the oxides of Mg, Y, Ce, Fe, Ca, Cr, Zr, Zn, Be, Al and selected rare earths. See U.S. patents 3,830,652; 4,304,576; 3,903,230; 4,046,580; 4,234,343; 4,102,698 and 4,038,092. The pressing aids function as a means to flux the fusion or densification of the $Si_3N_4$ powder during hot pressing by the formation of a low temperature liquid. Unfortunately, such liquid more readily forms a type of glassy or amorphous phase in the final product which inhibits high temperature physical properties of the ceramic and reduces the life of a cutting tool made from this material.

There has been little recognition in the hot pressing art of the role played by the formation of certain desirable second phase crystallites, such as oxynitrides, from such additives as a displacement for the glass phase to increase tool life. Investigators of hot pressed $Si_3N_4$ have detected the presence of various oxynitrides without understanding their significance or interrelationship to ceramic tool life and performance. Secondly, there has been little recognition of the role played by the retention of a small, controlled quantity of the glassy phase in protecting not only the displacing second phase crystallite, such as oxynitrides, against high temperature oxidation, but also other crystallites. In fact, the prior art has generally followed the axiom that adding oxygen to a powder system for forming a ceramic by nitriding will be detrimental.

This invention is concerned with the additives that must be selected and used in reactive amounts and under conditions that result in the formation of desirable second phase crystallites, accompanied by a small glass envelope; of particular interest is the use of $Y_2O_3$ and $Al_2O_3$.

In the reaction bonding art, oxides of aluminum have been mixed with silicon powder to promote a sialon product as a result of nitriding, see U.S. patent 4,038,092 and the article by K. H. Jack and W. J. Wilson, "Ceramics Based on the Si-Al-O-N and Related Systems", *Nature* (London) *Physical Science*, 233 (80) 25—29 (1972). Oxides of yttrium have been added to silicon powder prior to nitriding to promote subsequent sintering (see U.S. patent 4,285,895), or added to silicon nitride formed by the reaction of Si, $Al_2O_3$ and $N_2$, for the purpose of facilitating sintering, see U.S. patent 4,184,884. However, users of $Al_2O_3$ or $Y_2O_3$ in such reaction bonding techniques again have failed to recognize the role that can be played by the formation of certain silicon oxynitrides derived from the additives as a displacement for the glass phase. This lack of understanding is evident particularly in U.S. patent 4,285,895 wherein it is stated that a chemical analysis of the nitrided body exhibited 91% $Si_3N_4$, 9% $Y_2O_3$, and minor phases of free Y, Si, $O_2$ and $N_2$ (see column 6, lines 1—6), but no oxynitrides or silicates. This prior art also again failed to recognize the role played by a controlled quantity of glassy phase that is effective in protecting the crystallites against high temperature oxidation. The generation of the right oxynitrides or second phase crystallites will increase tool life, not by an increase in strength, but by an increaes in hardness and chemical stability.

According to the invention there is provided a method of making a reaction bonded/hot pressed silicon nitride comprising object, from a $Y_2O_3$ containing composition which object contains, silicon nitride, second phase crystallites and glass, characterised in that said method comprises (a) forming a compact from a mixture of powdered silicon $SiO_2$, $Y_2O_3$ and a glass forming oxide, (b) heating said compact in a nitriding atmosphere without the use of pressure normally associated with hot pressing to produce a silicon nitride comprising body consisting essentially of $Si_3N_4$, at least one yttrium silicon oxynitride and 0.2 to 1% by weight protective amorphous silicate coating said yttrium silicon oxynitride and (c) hot pressing said body at a temperature equal to or less than 1670°C to produce a silicon nitride comprising object of required dimension and density.

This invention provides also a silicon nitride comprising object that contains a controlled amount of a high alumina content silicate coating the crystallites of the object. The silicate functions to increase the wear resistance of the material when used as a cutting tool material.

Preferably, the $Y_2O_3$ is present in said mixture in an amount of at least 2% by weight of the mixture, said amount not only facilitating hot pressing of the object to substantially full density, but also providing substantially full reaction of said $Y_2O_3$ with said silica to form second phase crystallites in said object.

Preferably, the mixture is prepared by forming a first mixture of silicon, silica, alumina, said densification aid, heating the first mixture in a nitriding atmosphere to form a second mixture of silicon nitride, reaction product of silica and alumina, and second phase crystallites.

Preferably, the first mixture essentially contains by weight 2—19% $Y_2O_3$, .4—5% $Al_2O_3$, 1—3% $SiO_2$, and the remainder silicon.

The inventive method significantly reduces the formation of glass as a second phase in the $Si_3N_4$

2

product, the glass is displaced by crystallites formed, for the first time, prior to hot pressing as a result of the full reaction of available silicon and an effective amount of oxygen carrying agents, the available silicon being that not used in forming $Si_3N_4$. The combination of $Si_3N_4$ and second phase crystallites (a) reduces the wear rate of the resulting object when used as a cutting tool, (b) increases the hardness and high temperature stability of the object, and (c) achieves considerable processing economy by lowering the required hot pressing temperature and removing mixture proportion limitations normally imposed by lower viscosity requirements for powder in hot pressing.

Preferably, the silicon is 98% pure or more with less than 1.5% by weight metal·contaminants and less than 0.05% by weight carbon. Silica is present as a surface oxide on the starting silicon and is preferably introduced into the mixture as an oxide surface coating on the silicon powder as a result of milling the mixture (1—3% by weight of silicon). $Y_2O_3$ and $SiO_2$ are present in the mixture in a molar percent of silicon in the range of 0.4—2.4. The second phase crystallite is preferably limited to 2.9—14.4% by weight of the nitrided body which remains essentially the same hot pressed object.

If 3—19% (by weight of silicon) $Y_2O_3$ and 0.4—5% $Al_2O_3$ are present additional improvements are obtained, particularly the formation of yttrium silicon oxynitride crystallites (optimally $Y_1SiO_2N$), the former further reducing the required temperature during hot pressing and the latter promoting the formation of a particular protective amorphous silicate that coats the silicon oxynitride and prevents catastrophic oxidation failure at high temperature when used as a cutting tool.

The formation of a critically small amount of a protective amorphous glass, that possesses a low diffusion coefficient, is promoted by the presence of an oxide reactive with $SiO_2$ and $Y_2O_3$, particularly 0.4—5% $Al_2O_3$. The reactive oxide to form the glass may be selected from the group consisting of $Al_2O_3$, $MgO$, $CeO_2$, $Fe_2O_3$, $CaO$, $Cr_2O_3$, $ZrO_2$, $BeO$, and rare earth oxides. The glass is important to obtaining the optimum increase in the wear life of the object when used as a cutting tool or in high temperature oxidizing environments; the permitted glass forms a thin coating (i.e., 8—10 angstroms thick) on the crystallites reducing the transport of oxygen necessary to undesirable linear oxidation kinetics of the crystallites, such as the yttrium silicon oxynitrides. Proportioning the mixture to form at least 80% of the second phase crystallite as $Y_1Si_2O_2N$ (by restricting the amount of $Y_2O_3$ to 8—12%) causes the controlled amount of glass to have an improved diffusion coefficient free of microporosity. In addition, the nitriding cycle and level of hot pressing temperature affect the formation of $Y_1SiO_2N$ phase. The nitriding cycle should be designed to keep the starting composition of the nitriding gas substantially constant, and an exothermic reaction should be minimized as much as possible as by utilizing prereacted oxynitrides in the compacted mixture. The nitriding reaction should be designed to convert as much of the silicon to $Si_3N_4$ as possible, i.e., 99.5%, and of that amount at least 60% is in the alpha form. The hot pressing temperature should be designed to obtain a high alpha to beta $Si_3N_4$ conversion, beta $Si_3N_4$ having long, needle-like grains that produce a better knitted structure with better strength; preferably, this is about 1650°C (3000°F).

Optimally, the oxygen carrying agent/$SiO_2$ ratio is maintained at 1.1—6.4%. Controlling the ratio of $Y_2O_3/SiO_2$ desirably promotes reduction of the N-melilite phase ($Y_2O_3 \cdot Si_3N_4$) to no greater than 0.5% by weight of the body, and a density in said body of at least 2.3 g/cm³. The purity of the starting $Y_2O_3$ and $Al_2O_3$ is advantageously selected to be at or above 99.99% and 99.5%, respectively. A desirable average particle size for the mixture is obtained by milling so that at least 50% of the mixture is about 4.0 microns μm or less, and 90% of the mixture is less than 23 microns.

Heating to nitride preferably is carried out to an ultimate temperature of (2000—2600°F) 1090—1430°C (preferably 2560°F) for a time sufficient to produce a body consisting essentially of silicon nitride (preferably at least 60% by volume in the alpha form), 2.9—14.4% second phase crystallites, i.e., yttrium silicon oxynitride (preferably the $Y_1SiO_2N$ phase), and the remainder refractory silicate, free silicon, and unreacted $Y_2O_3$. The nitrided body is preferably characterized by a density of 2.3—2.78 g/cm³.

Hot pressing is advantageously carried out in an environment uncontrolled as to inertness (ambient atmosphere in a carbonaceous vessel) at an ultimate pressing temperature equal to or less than 1670°C, optimally 1371—1650°C (2500—3000°F), under an ultimate pressure of $2.48 \times 10^4$—$2.62 \times 10^4$ (3600—3800 psi) and for a period of 0.25—3.0 hours.

The compression ratio is substantially reduced to 1.0:1 to 1.8:1. The viscosity of the mixture used to nitride is permitted to be high as a result of these hot pressing conditions.

The resulting object is preferably characterized by the silicon nitride being substantially in the beta or beta prime form, the silicon oxynitrides are enveloped by a yttrium silicate glass in a thickness of 8—10 angstroms (0.8—1.0 nm) and having no microporosity. The object preferably posses a hardness HR of 88.5—92.0 on the 45-N scale, a density of 3.2—3.35 g/cm³, a fracture strength of about $5.86 \times 10^5$ kPa (85,000 psi) at 1200° in air in a 4-point bend test, and an oxidation resistance that prevents weight pickup by the object after 450 hours in air at 1000°C.

The preferred method for making a silicon nitride comprising object according to this invention is as follows.

1. Compacting

Preliminary to this step, a mixture of powdered silicon, $SiO_2$, and $Y_2O_3$ is prepared and milled. $SiO_2$ and $Y_2O_3$ are effective to form second phase crystallites, particularly oxynitrides, when reacted with the silicon under a heated nitrogen atmosphere. Use of these oxides will improve physical characteristics and formation of a second phase crystallite which (a) will uniformly be dispersed, and (b) substantially displace the detrimental glassy silicate phase normally formed except for a controlled and limited amount of the latter. Use of critical amounts of $Y_2O_3$ and $Al_2O_3$ will provide additional improvements, including (a) formation of the $Y_1SiO_2N$ as the predominant oxynitride phase resulting from nitriding, permitting much lower hot pressing temperatures leading to increased economy, (b) formation of a critically small amount of a protective amorphous glassy silicate coating the crystallite of oxynitride which is effective to prevent high temperature oxidation of the crystallite during high temperature cutting tool use.

For purposes of the preferred method, a uniform powder mixture is prepared with 2000 grams silicon (86.6 weight percent of mixture), 278 grams $Y_2O_3$ (12 weight percent of mixture and 13.9% of silicon), and 32 grams $Al_2O_3$ (1.4 weight percent of mixture and 1.6% of silicon). The usable range for the oxygen carrying agent is 0.4—2.3 molar percent of the mixture and 0.42—2.4 molar percent of silicon. $Y_2O_3$ is normally used in the range of 3—19% by weight of the silicon and 3.2—15.6% by weight of the mixture. The glass forming oxide, such as $Al_2O_3$, is used in a range of 0.4—5% by weight of the silicon, 0.4—4.0% by weight of the mixture. $SiO_2$ is present usually as an oxide on the silicon powder and increased to 1—3% by weight of the silicon by milling. The oxide that is added to be reactive with $SiO_2$ and $Y_2O_3$ to form the protective amorphous glass can be selected from the group consisting of MgO, $CeO_2$, $Al_2O_3$, $Fe_2O_3$, CaO, $Cr_2O_3$, $ZrO_2$, BeO, and other rare earth oxides.

Silicon is selected to have 98% or greater purity and a starting average particle size of 8—9.2 microns. The major trace metal contaminants experienced with such purity include, as a maximum: Fe—1.0%, Al—0.5%, and Mn—0.09%. Nonmetallic contaminants include, as a maximum: carbon—0.05% and $O_2$—less than 0.5%. Yttria is selected to have a purity of at least 99.99% with an average crystal size of 0.0438 microns (438A). Alumina is selected to have a purity of at least 99.5% with an average particle size of 0.3—0.5 microns.

The mixture is comminuted and blended by being charged into an inert milling jar along with grinding media in the form of Burundum (Regd. Trade Mark) cylinders (85% $Al_2O_3$ and 11% $SiO_2$, 2% MgO, 1.2% CaO, .8% of [$TiO_2$, $Fe_2O_3$, $Na_2O$, $K_2O$] which adds $Al_2O_3$ to the mixture by attrition), milled for 48 hours at 64 rpm then the mixture is separated from the media by use of a #10 mesh (2.0 mm) screen. The milling is preferably dry, but can be wet, with some accompanying disadvantages. The oxygen carrying agents must be in a reactive form with a high surface area and small crystal-line size. The resulting milled mixture will have at least 50% with an average particle size of about 4 microns, and 90% with an average particle size of less than 23 microns. The oxygen level after milling in air will be increased to 1.6 weight percent of the silicon, and be present as an oxide coating on the silicon in an amount of 3.0 weight percent. The oxide coating should never be stripped off. The ratio of oxygen carrying agent/$SiO_2$, such as $Y_2O_3/SiO_2$, is controlled to be in the range of 1.1—6.4, and preferably about 4.

A measured quantity of the milled mixture is loaded into a cold press die arrangement and pressed at ambient conditions by use of $9.65 \times 10^3$—$10.34 \times 10^3$ kPa (1400—1500 psi) to form a compact of a size about 15.24 cms by 1.52 cms (6 inches by 0.6 inch), and a density of 1.4 g/cm³.

## 2. Heating to nitride

The compact is heated in a nitriding atmosphere, without the use of pressure normally associated with hot pressing, to produce a silicon nitride comprising body consisting of $Si_3N_4$, at least one dispersed second phase crystallite (i.e., silicon yttrium oxynitride), 0.2—1% silicate (by weight of the body), and up to 0.5% weight of free silicon and unreacted oxygen carrying agents ($Y_2O_3$ and $Al_2O_3$). The body will have a size greater than and a density less than the object to be formed.

To carry out the heating, the compact is placed in an enclosed furnace, preferably evacuated to a pressure of less than 1 micron (1.333 μbar) and heated at a fast rate, i.e., 500°F/h (278°C/h) to 1200°F (649°C). The furnace is then filled with a gaseous mixture consisting of 72% by weight nitrigen, 3% hydrogen, and 25% helium, at a pressure of about 2.7 psig (18.6 kPa). The total $O_2$ and $H_2O$ content in such gaseous mixture is less than 4 ppm (parts per million). The temperature of the furance is then increased, in steps, to; 649—972°C (1200—1700°F) at 260°C/h (500°F/hr), to 927—1093°C (1700—2000°F) at 200°F/h (111°C/hr), and to a nitriding temperature of 2000—2600°F (1093—1427°C) at a slower rate. The temperature is held constant thereafter. Fresh nitrogen is intermittenly supplied to the furnace to replace the nitrogen consumed in forming $Si_3N_4$ and oxynitrides. Nitrogen is added when the pressure drops below 2.4 psig (16.5 kPa) and brought back up to maximum pressure of 2.7 psig. The temperature is increased back up to 1404°C (2560°F) after adding nitrogen. The material is cooled to room temperature at a rate of 250°F/h (139°C/h).

The nitriding body will preferably consist of silicon nitride (at least 60% of which is in the alpha form), 3—15% silicon yttrium oxynitride in the $Y_1SiO_2N$ phase, and the remainder a yttrium silicate glass (which may be theorized to be $Y_1SiO_2$), and up to 0.5% of silicon and unreacted $Y_2O_3$. Some trace amounts of the $Y_{10}Si_6O_{24}N_2$ phase may be present at times. The N-melilite phase ($Y_2O_3 \cdot Si_3N_4$) will be present in an amount no greater than 0.5% by weight of the body. The body will have a density of at least 2.3 g/cm³. The minimum alpha/beta $Si_3N_4$ ratio is 1.5. This body is an intermediate product or commodity that has independent utility as starting block for other shaping techniques, one of which is hot pressing.

## 3. Hot pressing

The nitrided body is hot pressed to produce a silicon nitride comprising object of required dimension

4

and density. A pressing fixture having graphite walls is used to carrying out hot pressing. The walls and nitrided body are both coated with a slurry of boron nitride and dried. The pressing fixture with the nitrided body therein is placed in the hot pressing furnace. The heating and pressing is carried out preferably in increments; (1) a mechanical loading of $6.89\times10^2$ kPa (100 psi) is applied at room temperature to the body; (2) temperature is increased to 1800°F (982°C) and pressure increased to $3.4\times10^3$ kPa (500 psi); (3) the temperature is then increased to 2500°F (1371°C) and pressure simultaneously increased to $17.2\times10^3$ kPa (2500 psi); (4) the temperature is finally increased to the hot pressing temperature of 3000°F (1649°C) and pressure increased to $2.44\times10^4$ kPa (3700 psi) the later conditions being maintained until at least 99% of desirably 99.5% of theoretical full density is achieved. This usually requires 0.25—3.0 hours at the hot pressing temperature. The object is then cooled at any rate, even quenched, to room temperature.

The resulting object will consist essentially of beta silicon nitride, 2.9—14.4% by weight silicon oxynitrides (predominantly $Y_1SiO_2N$ enveloped by a silicate phase having a thickness of 8—10 angstroms and having no microporosity. The object preferably possesses a hardness HR of 88.5—92.0 on the 45-N scale, a density of 3.2—3.35 g/cm$^3$, a fracture strength of about $5.86\times10^5$ kPa (85,000 psi) at 1200°C in a 4-point bend test, and an oxidation resistance that prevents weight pickup by the object after 450 hours in air at 1000°C. Some oxynitrides $Y_{10}Si_6O_{24}N_2/Y_4Si_2ON_2$ phase can be present up to 10% of the crystallite second phase.

Examples

A series of cutting tool samples were prepared and tested as to physical parameters and machining performance to illustrate how variations in processing and chemistry facilitate or deny obtaining the advantages of this invention. The results are summarized in Table 1. Column 2 indicates whether the sample was prepared from silicon powder or silicon nitride power. Samples 1—3 were prepared in accordance with conventional prior art hot pressing practices wherein powder additives were introduced to $Si_3N_4$ powder ($SiO_2$ is present as a surface oxide on the starting $Si_3N_4$ powder and as a result of milling) and directly subjected to hot pressing in the powder form. The samples disclosed in Table 1, which do not include the features of the claims herein, are disclosed as comparative examples.

Viscosity of the mixture is of some concern for samples 1—3 and limits the amount of additives that can be introduced without inhibiting milling and pressing. Accordingly, no mixture with greater than 9% oxygen carrying agents was prepared. The ingredients for these samples was based on a weight percentage of the silicon nitride mixture. The $Si_3N_4$ powder was 99% pure with a surface oxide ($SiO_2$) content of 1—3%. The $Y_2O_3$ powder was 99.9% pure.

Milling was carried out prior to hot pressing by use of $Al_2O_3$ milling media until the average particle size was 2—7 microns. A wetting lubricant was added during milling (methanol) in a ratio of 1:1 with the silicon nitride powder. The mixture was milled for a time dependent on mill speed, particle size of the starting powder, and the average particle size to be achieved, preferably about 2.5 microns. The mixture was then dried and screened (−100 mesh=0.147 mm).

Samples 4—13 were prepared by placing the indicated proportions of silicon powder and oxide additives (see column 3) in a polypropylene nalgene jar containing Burundum® cylinders as the grinding media (10,000 grams of the cylinders as a batch), each having 13/16" (33/40.6 mm) as length or diameter. The starting silicon was 98.5% pure with Fe (0.6 weight percent), Al 0.11 weight percent, and Mn (0.06 weight percent) as the major trace metal contaminants. All other trace metals were less than 0.05 weight percent. The oxygen level of the starting silicon was 0.46 weight percent, carbon level 0.03 weight percent, and the sulfur level 0.002 weight percent. The starting silicon powder was 100% less than 45 microns, having an average particle size of 8 microns. The yttria used was 99.99% pure with an average crystal size of 438Å and a surface area of 6.3 m$^2$/g. The alumina used was 99.5% pure with an ultimate crystal size of 0.3—0.5 microns. The powder mixture was milled for 48 hours at a speed of 64 rpm and then separated from the grinding media by passing the powder mixture through a #10 mesh (2.0 mm) screen. No attrition was found from the grinding media. The resulting powder was a uniform mixture of silicon powder and oxide additives reduced in particle size to an average of 3.1 microns. The oxygen level of silicon powder was increased to 1.6 weight percent, which corresponds to an $SiO_2$ content of 3.0 weight percent. The starting $Y_2O_3/SiO_2$ ratio was 7.2 (the alumina was also a small source of $SiO_2$).

In samples 4—13 a portion of the powder mixture (about 340 grams) was cold pressed at $9.7\times10^3$ kPa (1400 psi) into 15.24 cms (6") diameter discs, 0.127—0.152 cms (.05—.06") in thickness. The compacts were then nitrided and reacted to form $Si_3N_4$ and second phase crystallites with some small proportion of silicate glass. The nitriding cycle employed is similar to that described in U.S. patent 4,127,684.

The nitrided bodies were removed from the furnace and sandblasted to remove any white coating appearing on the bodies. The chemistry of the second phase material for each of the samples prior to hot pressing is characterised in column 4 of Table I. In samples 4—13 the nitriding cycle produced, except for sample 8, some proportion of second phase crystallites. The controlled amount of silicate glass that was not displaced is indicated as a proportion of the second phase material.

All of the samples were hot pressed using the pressure and ultimate temperature indicated for the preferred embodiment herein. Pressing was carried out for 1—2 hours to obtain a complete conversion of alpha to beta. $Si_3N_4$. The hot pressed object was then cooled to room temperature and analyzed for physical parameters. The discs were then diamond sawed into cuting tools of TNC-434 configuration and subjected to a machining operation involving continuous cutting of a simple cylindrical surface of a grey cast iron stator member having a hardness of 179—222 (brinnel scale with 0.003 kg/0.03 N load). The number of pieces cut in a period of one hour and the flank wear on the cutting tool (measured in inches) is given in columns 7 and 8, respectively.

Sample 10, hot pressed at the higher temperature of 1750°C, had a mottled appearance characteristic of microporosity in the material. Areas of high concentration of yttrium were evident in sample 5 showing microporosity as indicated by a heavy mottled appearance and non-uniformity.

Preferably the $Al_2O_3/SiO_2$ ratio be greater than 2. When other densification aids (oxides) are present in the mixture, the ratio no longer is the ratio of the starting $Al_2O_3$ and $SiO_2$. A portion of the $SiO_2$ becomes available to react with the densification aid, leaving a much smaller amount of $SiO_2$ to be calculated into the ratio. Thus samples 3, 7, 9, 10, 11 and 13 possess an $Al_2O_3/SiO_2$ ratio greater than 2, but samples 1, 2, 4, 5, 6, 8 and 12 do not. You will note the machining results show a bias in favor of the samples having the right ratio. Ideally, the ratio should be obtained without the need or presence of a densification aid; the state of the art does not allow for this and thus greater care in proportioning is needed to achieve the correct silicate in the final product. Such silicate provides a desirable interface between the material and metal being cut when used as a cutting tool. The silicate also facilitates dissolution of silicon nitride during hot pressing to obtain a finer grained structure more effective as a cutting tool material.

Table I demonstrates that proper proportioning of the selected oxygen carrying agents in a silicon mixture (such as 3—19% $Y_2O_3$), which is then nitrided to substantially fully react the ingredients. Will cause the formation of crystallites that displace glass. Table I also demonstrates that further improvements in oxidation resistance at 1000°C and flank wear take place by adding $Al_2O_3$ in a controlled amount of 0.4—5% which promotes the formation of low diffusion coefficient glass having little or no microporosity associated therewith.

TABLE I

| 1) Sample | 2) Base | 3) Additive % by weight of mixture | 4) Form of additive, or converted additive, just prior to H.P. | 5) Glass/ crystallite ratio in H.P. object | 6) Types of crystallites in H.P. object | Machining performance | |
|---|---|---|---|---|---|---|---|
| | | | | | | 7) Flank wear on tool (greater than .03 is failure) | 8) Parts machined stopped at 420 |
| 1 | $Si_3N_4$ | 5% MgO 1% $SiO_2$ | NA | 100% glass 0% cryst. | None | 0.030 | 350 |
| 2 | $Si_3N_4$ | 8% $Y_2O_3$ 1% $SiO_2$ | NA | very porous structure (substantial crystalites) | $Y_{10}$, N $Y_2$ $Y_1$ | >0.03 | 20 |
| 3 | $Si_3N_4$ | . 8% $Y_2O_3$ 1% $Al_2O_3$ 1% $SiO_2$ | NA | 50% glass 50% cryst. | $Y_{10}$ $Y_1$ $Y_2$, N | 0.016— 0.024 | 400 |
| 4 | Si | 3.5% $Y_2O_3$ 0% $SiO_2$ (stripped) | N-melilite | 95% cryst. 5% glass | N-melilite $Y_{10}$ $Y_2$ $Y_1$ | 0.018— 0.024 | 420 |
| 5 | Si | 13% $Y_2O_3$ 2.5% $SiO_2$ | $Y_{10}$, $Y_1$, N | 100% cryst. (no glass) | $Y_{10}$, $Y_1$, N | 0.011— 0.014 | 420 |
| 6 | Si | 4% CeO 19% $ZrO_2$ 1% $Y_2O_3$ | Partially stabilized $ZrO_2$ | 90% glass 10% cryst. | $ZrO_2$ | 0.030 | 420 |
| 7 | Si | 2% $Y_2O_3$ 1% $Al_2O_3$ 2% $SiO_2$ | N, $Y_1$ $Y_{10}$ | 60% glass 40% cryst. | N $Y_1$ $Y_{10}$ | 0.009— 0.011 | 420 |

6

TABLE I (Continued)

| 1) Sample | 2) Base | 3) Additive % by weight of mixture | 4) Form of additive, or converted additive, just prior to H.P. | 5) Glass/crystallite ratio in H.P. object | 6) Types of crystallites in H.P. object | Machining performance | |
|---|---|---|---|---|---|---|---|
| | | | | | | 7) Flank wear on tool (greater than .03 is failure) | 8) Parts machined stopped at 420 |
| 8 | Si | 5% $Y_2O_3$ 6% $Al_2O_3$ 3% $SiO_2$ | all glass | 100% glass | None | 0.030 | 250 |
| 9 | Si | 12% $Y_2O_3$ 1.4% $Al_2O_3$ 2.6% $SiO_2$ | $Y_1$ oxynitride | 20% glass 80% cryst. | $Y_1$ | 0.0075—0.0085 | 420 |
| 10 | Si | Same as Sample #9. H.P. at higher temperature | $Y_1$ $Y_{10}$ N | 20% glass 80% cryst. | $Y_{10}$, $Y_1$, N | 0.009—0.0115 | 420 |
| 11 | Si | 19% $Y_2O_3$ 1% $Al_2O_3$ 2% $SiO_2$ | $Y_1$ $Y_2$ | 20% glass 80% cryst. | $Y_1$, $Y_2$ | 0.016—0.018 | 420 |
| 12 | · Si | 25% $Y_2O_3$ 1% $Al_2O_3$ 3% $SiO_2$ | $Y_1$ $Y_{10}$ N | 5% glass 95% cryst. | $Y_1$ $Y_{10}$ N | >0.03 | <100 |
| 13 | Si | 8% $Y_2O_3$ 3.5% $Al_2O_3$ 2% $SiO_2$ | $Y_1$ | 15% glass 85% crsyt. | $Y_1$ | 0.0075—0.0085 | 420 |

$Y_1$, $Y_2$, $Y_{10}$, and N denote $Y_1SiO_2N$, $Y_2O_3$, $Y_{10}Si_6O_{24}N_2$ and N-melilite, respectively.

**Claims**

1. A method of making a reaction bonded/hot pressed silicon nitride comprising object, from a $Y_2O_3$ containing composition which object contains, silicon nitride, second phase crystallites and glass, characterised in that said method comprises (a) forming a compact from a mixture of powdered silicon, $SiO_2$, $Y_2O_3$ and a glass forming oxide, (b) heating said compact in a nitriding atmosphere without the use of pressure normally associated with hot pressing to produce a silicon nitride comprising body consisting essentially of $Si_3N_4$, at least one yttrium silicon oxynitride and 0.2 to 1% by weight protective amorphous silicate coating said yttrium silicon oxynitride and (c) hot pressing said body at a temperature equal to or less than 1670°C to produce a silicon nitride comprising object of required dimension and density.

2. A method as claimed in Claim 1, in which said nitrided body contains no greater than 0.5% by weight free silicon and unreacted oxygen carrying agents.

3. A method as claimed in Claim 1 or 2, in which said silicon is at least 98% pure with less than 1.5% by weight metal contaminants and less than 0.05% by weight carbon.

4. A method as claimed in any one of Claims 1 to 3, in which said oxide of silicon is present as a surface oxide on the silicon powder in the range of 1—3% by weight of the mixture.

5. A method as claimed in any one of Claims 1 to 4 in which said body contains 2.9—24.4% by weight yttrium silicon oxynitride.

6. A method as claimed in any one of the preceding claims in which said glass forming oxide is selected from the group consisting of $Al_2O$, MgO, $CeO_2$, $Fe_2O_3$, CaO, $Cr_2O_3$, $ZrO_2$, BeO and other rare earth oxides.

7. A method as claimed in any one of the preceding claims in which said protective amorphous silicate coating is 8—10 angstroms (0.8—1.0 nm) thick.

8. A method as claimed in any one of the preceding claims in which the chemistry of said compact is

**0 126 063**

proportioned to form an amount of $Y_1SiO_2N$ second phase crystallite thereby reducing microporosity associated with said protective amorphous glass and improving the diffusion coefficient of said glass.

9. A method as claimed in Claim 1, in which said mixture includes $Y_2O_3$ 3—19% by weight of the silicon, $Al_2O_3$ 0.4—5% by weight of the silicon and $SiO_2$ 1—3% by weight of the silicon, said $Y_2O_3$ and $Al_2O_3$ having a purity respectively of at least 99.9% and 99.5%.

10. A method as claimed in Claim 9, in which said $Al_2O_3$ and $SiO_2$ are proportioned to provide an $Al_2O_3/SiO_2$ ratio 1.1—6.4 and in which said silicon nitride and said yttrium silicon oxynitride are coated with high alumina content silicate film.

11. A method as claimed in any one of the proceeding claims in which the heating of step (b) is carried out to maintain a substantially constant nitrogen content in said atmosphere and the exothermic reaction of said heating is controlled.

12. A method as claimed in Claim 11, in which in the nitrided body of step (b) the N-melilite phase $(Y_2O_3, Si_3N_4)$ is present in an amount no greater than 0.5% by weight of the body.

13. A method as claimed in Claim 1, in which said glass forming oxide is selected to form a silicate glass having a low diffusion coefficient for oxygen which prevents catastrophic linear oxidation kinetics of the yttrium silicon oxynitride in said object when used as a tool in machining at 1000°C or greater.

14. A method as claimed in Claim 1, in which said mixture is proportional to from yttrium silicon oxynitride comprised at least 80% by weight of $Y_1SiO_2N$.

15. A method as claimed in Claim 14, in which said $Y_1SiO_2N$ crystallite comprises 3—15% of the weight of said body, at least 80% and said $Y_1SiO_2N$ phase converting to another silicon oxynitride phase during hot pressing while retaining said silicate coating therearound.

16. A method as claimed in any one of the preceding claims, in which said hot pressing is carried out at an ultimate temperature of 1200—1650°C in an environment uncontrolled as to inertness.

17. A method as claimed in any one of the preceding claims in which the average particle size for at least 50% of said mixture is about 3.0 micrometers, and for at least 90% of the mixture is about 23 micrometers.

18. A method as claimed in Claim 1, in which said hot pressing ultimate temperature is in the range of ·2500—3000°F (1371—1650°C) and the ultimate pressure is in the range of $2.48 \times 10^4$—$2.62 \times 10^4$ kPa (3600—3800 psi).

19. A method as claimed in Claim 18, in which said ultimate pressure and temperature is maintained for a period of 0.25—3.0 hours.

20. A method as claimed in any one of the preceding claims in which said heating in the nitrogen atmosphere is carried out to an ultimate temperature of 1090—1430°C (2000—2600°F).

21. An object resulting from the practice of the method of Claim 1, said object being characterized by the presence of 1—7.5% by weight second phase crystallite, and a density of 3.2—3.35 g/cm³.

22. An object as claimed in Claim 21, in which said object additionally is characterized by a fracture strength of about $6.2 \times 10^5$ kPa (90,000 psi) at 1200°C in air in a 4-point bend test and an oxidation resistance that prevents weight pickup by the tool after 450 hours in air at 1000°C.

23. An object as claimed in Claim 22, in which the object has a visual homogeneity.

24. An object as claimed in Claim 23, in which said silicate coating on said oxynitride crystallites has substantially no microporosity associated therewith.

**Patentansprüche**

1. Verfahren zur Herstellung eines reaktionsgebundenen/heißgepressten Siliciumnitridgegenstands aus einer $Y_2O_3$ enthaltenden Zusammensetzung, welcher Siliciumnitrid, Zweitphasenkristallite und Glas enthält, dadurch gekennzeichnet, daß bei diesem Verfahren (a) ein Preßling aus einer Mischung pulverförmigen Siliciums, $SiO_2$, $Y_2O_3$ und einem glasbildenen Oxid geformt, (b) jener Preßling in einer nitrierenden Atmosphäre ohne Anlegen des beim Heißpressen üblicherweise angewandten Druckes zur Herstellung eines Siliciumnitrid enthaltenden Körpers, der im wesentlichen aus $Si_3N_4$, mindestens einem Yttriumsiliciumoxidnitrid und 0,2 bis 1 Gew.-% amorpher, dieses Yttriumsiliciumoxinitrid beschichtender Schutzsilikate besteht, erhitzt und (c) dieser Körper bei einer Temperatur gleich oder weniger als 1870°C zur Bildung eines Siliciumnitrid enthaltenden Körpers der erforderlichen Abmessung und Dichte heißgepresst wird.

2. Verfahren nach Anspruch 1, wobei dieser nitrierte Körper nicht mehr als 0,5 Gew.-% freies Silicium und nicht umgesetzte Sauerstoffträgermittel enthält.

3. Verfahren nach Anspruch 1 oder 2, wobei jenes Silicium mindestens 98% rein ist und weniger als 1,5 Gew.-% Metallverunreinigungen und weniger als 0,05 Gew.-% Kohlenstoff enthält.

4. Verfahren nach einem der Ansprüche 1 bis 3, wobei jenes Siliciumoxid als Oberflächenoxid auf dem Siliciumpulver im Bereich von 1—3 Gew.-% der Mischung vorliegt.

5. Verfahren nach einem der Ansprüche 1 bis 4, wobei dieser Körper 2,9—24,4 Gew.-% Yttriumsiliciumoxinitrid enthält.

6. Verfahren nach einem der vorhergehenden Ansprüche, wobei das glasbildende Oxid aus der $Al_2O_3$, MgO, $CeO_2$, $Fe_2O_3$, CaO, $Cr_2O_3$, $ZrO_2$, BeO und andere seltene Erdoxide umfassenden Gruppe ausgewählt ist.

8

7. Verfahren nach einem der vorhergehenden Ansprüche, wobei die Beschichtung aus jenen amorphen Schutzsilikaten eine Dicke von 8—10 Angström (0,8—1,0 nm) hat.

8. Verfahren nach einem der vorhergehenden Ansprüche, wobei die chemische Zusammensetzung dieses Preßlings auf die Bildung eines Gehalts an $Y_1SiO_2N$-Zweitphasenkristalliten bemessen ist, womit die mit dem amorphen Schutzglas gekoppelte Mikroporosität verringert und der Diffusionskoeffizient dieses Glases verbessert wird.

9. Verfahren nach Anspruch 1, wobei diese Mischung 3—18 Gew.-% $Y_2O_3$, 0,4—5 Gew.-% $Al_2O_3$ und 1—3 Gew.-% $SiO_2$, jeweils bezogen auf Silicium, enthält, wobei das $Y_2O_3$ und das $Al_2O_3$ eine Reinheit von mindestens 99,9% bzw. 99,5% aufweisen.

10. Verfahren nach Anspruch 9, wobei $Al_2O_3$ und $SiO_2$ auf ein $Al_2O_3/SiO_2$-Verhältnis von 1,1—6,4 bemessen sind und wobei das Siliciumnitrid und das Yttriumsiliciumoxinitrid mit einem Silikatfilm von hohem Tonerdegehalt beschichtet sind.

11. Verfahren nach einem der vorhergehenden Ansprüche, wobei das Heizen in Stufe (b) unter Aufrechterhaltung eines im wesentlichen konstanten Stickstoffgehalts in jener Atmosphäre durchgeführt und die exotherme Reaktion während des Heizens kontrolliert wird.

12. Verfahren nach Anspruch 11, wobei in diesem nitrierten Körper aus Stufe (b) die N-Melilithphase ($Y_2O_3$, $SiO_2$) in einer Menge von nicht mehr als 0,5 Gew.-% des Körpers vorliegt.

13. Verfahren nach Anspruch 1, wobei das glasbildende Oxid für die Bildung eines Silikatglasses mit einem niedrigen Diffusionskoeffizienten für Sauerstoff ausgewählt ist, wodurch katastrophale lineare Oxidationskinetik des Yttriumsiliciumoxinitrids in dem Gegenstand verhindert wird, wenn dieser als maschinelles Bearbeitungswerkzeug bei 1000°C oder darüber zum Einsatz kommt.

14. Verfahren nach Anspruch 1, wobei diese Mischung so bemessen ist, daß sich aus mindestens 80 Gew.-% $Y_1SiO_2N$ bestehendes Yttriumsiliciumoxinitrid bildet.

15. Verfahren nach Anspruch 14, wobei 3—15 Gew.-% des besagten Körpers aus diesem $Y_1SiO_2N$-Kristallit besteht und wenigstens 80% dieser $Y_1SiO_2N$-Phase während der Heißpressung unter Erhalt jener ihn umhüllenden Silikatbeschichtung in eine andere Siliciumoxinitridphase überführt wird.

16. Verfahren nach einem der vorhergehenden Ansprüche, wobei das Heißpressen bei einer Endtemperatur von 1200—1650°C in einem auf Inertheit nichtkontrollierten Milieu durchgeführt wird.

17. Verfahren nach einem der vorhergehenden Ansprüche, wobei die durchschnittliche Teilchengroße für mindestens 50% der Mischung etwa 3,0 Mikrometer und für mindestens 90% der Mischung etwa 23 Mikrometer beträgt.

18. Verfahren nach Anspruch 1, wobei die Endtemperatur besagten Heißpressens im Bereich von 1371—1650°C (2500—3000°F) und der Enddruck im Bereich von $2,48 \times 10^4$—$2,62 \times 10^4$ kPa (3600—3800 psi) liegen.

19. Verfahren nach Anspruch 18, wobei dieser Enddruck bzw. diese Endtemperatur für eine Dauer von 0,25—3,0 Stunden aufrechterhalten werden.

20. Verfahren nach einem der vorhergehenden Ansprüche, wobei das Heizen in der Stickstoffatmosphäre bei einer Endtemperatur von 1090—1430°C (2000—2800°F) durchgeführt wird.

21. Gegenstand als Ergebnis der Durchführung des Verfahrens nach Anspruch 1, gekennzeichnet durch die Gegenwart von 1—7,5 Gew.-% Zweitphasenkristallit und eine Dichte von 3,2—3,35 g/cm³.

22. Gegenstand nach Anspruch 21, worin dieser Gegenstand zusätzlich durch eine Bruchfestigkeit von etwa $6,2 \times 10^5$ kPa (90,000 psi) bei einem 4-Punktebiegeversuch bei 1200°C in Luft und eine Oxidationsbeständigkeit zur Verhinderung einer Gewichtsaufnahme durch das Werkzeug nach 450 Stunden in Luft bei 1000°C gekennzeichnet ist.

23. Gegenstand nach Anspruch 22, worin der Gegenstand ein homogenes Aussehen zeigt.

24. Gegenstand nach Anspruch 23, worin besagte Silikatbeschichtung auf besagten Oxinitridkristalliten im wesentlichen keine damit gekoppelte Mikroporosität aufweist.

**Revendications**

1. Procédé de préparation d'un objet comprenant du nitrure de silicium lié par réaction/comprimé à chaud à partir d'une composition contenant $Y_2O_3$, lequel objet contient du nitrure de silicium, une seconde phase de cristallites et un verre, ledit procédé étant caractérisé en ce qu'il comprend (a) la formation d'un produit comprimé à partir d'un mélange de poudre de silicium, $SiO_2$, $Y_2O_3$ et d'un oxyde formateur de verre, (b) le chauffage dudit produit comprimé dans une atmosphère nitrurante sans utilisation de la pression normalement associée à la compression à chaud pour produire un corps comprenant du nitrure de silicium constitué essentiellement de $Si_3N_4$, d'au moins un oxynitrure d'yttrium et de silicium et 0,2 à 1% en poids d'un revêtement de silicate amorphe protecteur sur ledit oxynitrure d'yttrium et de silicium, et (c) la compression à chaud dudit corps à une température égale ou inférieure à 1670°C pour produire un objet comprenant du nitrure de silicium de dimensions et de densité requises.

2. Procédé selon la revendication 1 dans lequel ledit corps nitrure ne contient pas plus de 0,5% en poids de silicium libre et d'agents vecteurs d'oxygène n'ayant pas réagi.

3. Procédé selon la revendication 1 ou 2 dans lequel ledit silicium a une pureté d'au moins 98% avec moins de 1,5% en poids de contaminants métalliques et moins de 0,05% en poids de carbone.

4. Procédé selon l'une quelconque des revendications 1 à 3, dans lequel ledit oxyde de silicium est présent sous forme d'un oxyde superficiel sur la poudre de silicium dans la gamme de 1 à 3% en poids par rapport au mélange.

5. Procédé selon l'une quelconque des revendications 1 à 4, dans lequel ledit corps contient 2,9 à 24,4% en poids d'oxynitrure d'yttrium et de silicium.

6. Procédé selon l'une quelconque des revendications précédentes dans lequel ledit oxyde formateur de verre est choisi parmi $Al_2O_3$, $MgO$, $CeO_2$, $Fe_2O_3$, $CaO$, $Cr_2O_3$, $ZrO_2$, $BeO$ et d'autres oxydes des terres rares.

7. Procédé selon l'une quelconque des revendications précédentes dans lequel ledit revêtement de silicate amorphe protecteur a une épaisseur de 8 à 10 angströms (0,8—1,0 mm).

8. Procédé selon l'une quelconque des revendications précédentes dans lequel la composition chimique dudit produit comprimé est dosée pour former une quantité de seconde phase de cristallites d'$Y_1SiO_2N$ afin de réduire la microporosité associée audit verre amorphe protecteur et améliorer le coefficient de diffusion dudit verre.

9. Procédé selon la revendication 1, dans lequel ledit mélange comprend 3 à 19% en poids de $Y_2O_3$ par rapport au silicium, 0,4 à 5% en poids d'$Al_2O_3$ par rapport au silicium et 1 à 3% en poids de $SiO_2$ par rapport au silicium; lesdits $Y_2O_3$ et $Al_2O_3$ ayant respectivement une pureté d'au moins 99,9% et 99,5%.

10. Procédé selon la revendication 9 dans lequel lesdits $Al_2O_3$ et $SiO_2$ sont dosés pour assurer un rapport $Al_2O_3/SiO_2$ de 1,1 à 6,4 et dans lequel ledit nitrure de silicium et ledit oxynitrure d'yttrium et de silicium sont revêtus d'une pellicule de silicate à teneur élevée en alumine.

11. Procédé selon l'une quelconque des revendications précédentes dans lequel le chauffage du stade (b) est effectué pour maintenir une teneur en azote pratiquement constante dans ladite atmosphère et la réaction exothermique dudit chauffage est contrôlée.

12. Procédé selon la revendication 11 dans lequel, dans le corps nitruré du stade (b), la phase de N-mélilite ($Y_2O_3 \cdot Si_3N_4$) est présente en une proportion ne dépassant pas 0,5% du poids du corps.

13. Procédé selon la revendication 1 dans lequel ledit oxyde formateur de verre est choisi pour former un verre de silicate ayant un faible coefficient de diffusion de l'oxygène qui évite une cinétique d'oxydation linéaire soudaine et complète de l'oxynitrure d'yttrium et de silicium dans ledit objet lorsqu'il est utilisé comme outil dans l'usinage à 1000°C ou plus.

14. Procédé selon la revendication 1 dans lequel ledit mélange est dosé pour former de l'oxynitrure de silicium et d'yttrium comprenant au moins 80% en poids d'$Y_1SiO_2N$.

15. Procédé selon la revendication 14 dans lequel lesdites cristallites d'$Y_1SiO_2N$ constituent 3 à 15% du poids dudit corps, au moins 80% de ladite phase de $Y_1SiO_2N$ étant transformés en une autre phase d'oxynitrure de silicium pendant la compression à chaud tout en conservant ledit revêtement de silicate qui l'entoure.

16. Procédé selon l'une quelconque des revendications précédentes dans lequel ladite compression à chaud est effectuée à une température finale de 1200 à 1650°C dans un environnement dont le caractère inerte n'est pas contrôlé.

17. Procédé selon l'une quelconque des revendications précédentes dans lequel la granulométrie moyenne d'au moins 50% dudit mélange est d'environ 3,0 micromètres et celle d'au moins 90% du mélange est d'environ 23 micromètres.

18. Procédé selon la revendication 1 dans lequel ladite température finale de compression à chaud est dans la gamme de 2500 à 3000°F (1371—1650°C) et la pression finale est dans la gamme de $2,48\times10^4$ à $2,62\times10^4$ kPa (3600 à 3800 psi).

19. Procédé selon la revendication 18 dans lequel lesdites pression et température finales sont maintenues pendant une période de 0,25 à 3,0 heures.

20. Procédé selon l'une quelconque des revendications précédentes dans lequel ledit chauffage dans l'atmosphère d'azote est effectué à une température finale de 1090 à 1430°C (2000 à 2600°F).

21. Objet résultant de la mise en pratique du procédé de la revendication 1, ledit objet étant caractérisé par la présence de 1 à 7,5% en poids d'une seconde phase de cristallites et par une masse volumique de 3,2 à 3,35 g/cm$^3$.

22. Objet selon la revendication 21, ledit objet étant de plus caractérisé par une résistance à la cassure d'environ $6,2\times10^5$ kPa (90,000 psi) à 1200°C dans l'air selon un essai de flexion en quatre points et une résistance à l'oxydation qui empêche l'augmentation du poids de l'outil après 450 heures dans l'air à 1000°C.

23. Objet selon la revendication 22, lequel objet est visuellement homogène.

24. Objet selon la revendication 23 dans lequel aucune microporosité n'est pratiquement associée audit revêtement de silicate sur lesdits cristallites d'oxynitrure.